# EUROPEAN PATENT APPLICATION

(11) **EP 2 926 672 A1**
(43) Date of publication of application: **07.10.2015**
(21) Application number: 13858436.2
(22) Date of filing: 26.11.2013
(51) Int. Cl.: A23L 1/217

(54) **NON-FRIED POTATO CHIPS AND PRODUCTION METHOD THEREFOR**

(30) Priority: 27.11.2012 JP 2012258352
(71) Applicant: Nissin Foods Holdings Co., Ltd., Osaka-shi, Osaka 532-8524 (JP)
(72) Inventor: ONISHI, Atsushi, Osaka-shi Osaka 532-8524 (JP); MIYAZAKI, Yoshifumi, Osaka-shi Osaka 532-8524 (JP); TANAKA, Mitsuru, Osaka-shi Osaka 532-8524 (JP)
(74) Representative: Nieuwenhuys, William Francis
(86) International application number: PCT/JP2013/006939
(87) International publication number: WO 2014/083837

(57) **Abstract**

Disclosed herein is a method for producing non-fried potato chips that are produced without frying in oil to reduce their oil content but are comparable in flavor and texture to potato chips produced by frying in oil. The method for producing potato chips includes the step of subjecting potato slices to heat treatment with superheated steam and then subjecting the potato slices to heat treatment performed by blowing high-temperature and high-velocity air stream at 100°C or higher onto the potato slices.

## Description

### Technical Field

The present invention relates to non-fried potato chips and a method for producing the same.

### Background Art

Potato chips produced by frying thin potato slices in high-temperature oil have a unique light crispy texture and a savory flavor. However, fried potato chips have a high oil content that reaches about 40% of the product weight, and therefore have a very high calorie content. Therefore, some methods have been developed to produce non-fried potato chips having a low oil content. However, non-fried potato chips can hardly have a crispy texture like conventional potato chips, but have a crunchy texture or a texture like thin paper.

Hereinbelow, conventional techniques relating to snack foods including non-fried potato chips and fabricated potato chips will be described with reference to prior patent literatures.

Patent Literatures 1, 2, and 3 disclose techniques in which potato is heated with microwaves and then further dried by another drying method, and all these techniques focus on dehydration and puffing caused by microwaves. Patent Literatures 4 and 5 disclose techniques in which potato is dried using superheated steam, and both the techniques are intended to puff dough by a large amount of heat of superheated steam. Further, Patent Literatures 6 and 7 disclose heat-drying techniques in which puffing is caused by blowing high-temperature and high-velocity air stream.

Some of these prior patent literatures describe also a drying method in which microwaves and superheated steam are used in combination and a drying method in which microwaves and high-temperature and high-velocity air stream are used in combination. When dough prepared by mashing potatoes to a paste is used as a raw material as in the case of fabricated potato chips, the methods described in the prior patent literatures can produce potato chips having a crispy texture like fried potato chips. However, when raw potato slices are directly used, none of the methods described in the prior patent literatures can produce potato chips having a crispy texture like fried potato chips.

### Citation List

### Patent Literature

PTL 1: JP-A-56-39760
PLT 2: JP-W-6-508518
PLT 3: JP-W-2000-508887
PTL 4: JP-A-2006-191871
PLT 5: Japanese Utility Model No. 3160399
PLT 6: JP-A-2005-245389
PTL 7: JP-W-2001-510686

### Summary of Invention

### Technical Problem

It is an object of the present invention to provide a production method in which potato chips are produced not by frying in oil but by drying so that their oil content is reduced but their flavor and texture are comparable to those of potato chips produced by frying in oil, which are difficult to produce by conventional techniques.

### Solution to Problem

In order to achieve the above object, the present inventors have focused attention on heat treatment of potato at high temperature, and therefore have tested various heating methods. However, desired flavor and texture could hardly be achieved by a single drying method. Then, the present inventors have studied various combinations of drying methods, and as a result have succeeded in producing potato chips comparable in texture to potato chips produced by frying in oil even when potato slices are used as a raw material. This has led to the completion of the present invention.

More specifically, the present invention is directed to a method for producing potato chips, comprising the step of subjecting potato slices to heat treatment with superheated steam and then subjecting the potato slices to heat treatment with high-temperature and high-velocity air stream.

Here, the superheated steam refers to saturated steam heated to 100°C or higher at ordinary pressure. Therefore, the potato slices can be heated with water vapor at 100°C or higher having a very large amount of heat. Further, the heat treatment with high-temperature and high-velocity air stream refers to a method in which high-temperature and high-velocity air stream at 100°C or higher is blown onto the potato slices to heat the potato slices at once. The heat treatment is performed by, for example, blowing high-temperature air stream onto food through slit- or tube-shaped nozzles placed in a heating chamber at a high air velocity, specifically an air velocity exceeding 40 m/s to heat the food. Such a technique is used also for producing puffed confectionery or for baking cookies.

In this way, potato slices are treated with high-temperature superheated steam at 100°C or higher, and are then puffed by blowing high-temperature and high-velocity air stream thereonto. As a result, the inside of the potato slices is sufficiently and uniformly puffed, and therefore non-fried potato chips having a light texture can be obtained which cannot be obtained by any conventional method.

Further, in the present invention, oil is preferably applied to the potato slices before the heat treatment with high-temperature and high-velocity air stream. This allows the non-fried potato chips to have a more crispy texture like fried potato chips. Here, the amount of the oil applied to the potato slices may be very small. Therefore, the oil content of the product according to the present invention can be reduced to one-half or less, optimally about 1/3 to 1/20 of that of a fried product while the product according to the present invention is comparable in crispy texture to the fried product. This is effective also in reducing the amount of production of acrylamide suspected of being a carcinogen as compared to the fried product.

Further, in the present invention, the potato slices are preferably further subjected to final drying by hot-air drying after the heat treatment with superheated steam and the heat treatment with high-temperature and high-velocity air stream. The potato slices may be dried by continuously performing the heat treatment with high-temperature and high-velocity air stream. In this case, however, the potato slices are likely to burn due to high temperature. Therefore, after being puffed with high-temperature and high-velocity hot air, the potato slices are preferably dried in a conventional hot-air drier at a lower temperature of, for example, 100°C or less.

Further, in the present invention, the potato slices are preferably subjected to heat treatment with microwaves before the heat treatment with high-temperature and high-velocity air stream and before or after the heat treatment with superheated steam. It is to be noted that the heat treatment with microwaves refers to heating by the interaction between microwaves and the potato slices, that is, heating by absorption of microwaves by the potato slices due to dielectric loss, and conversion of their energy to heat.

When the heat treatment with superheated steam and the heat treatment with microwaves are performed in combination, heating with microwaves is considered to contribute particularly to heating of inside of the potato slices, and heating with superheated steam is considered to contribute particularly to heating of surface of the potato slices. Therefore, performing both the heat treatments is estimated to further improve the conditions of the potato slices after heating leading to puffing.

In the present invention, the heat treatment with superheated steam is preferably performed once or more at a temperature of about 120°C or higher but 300°C or less for about 10 seconds to 2 minutes at a time. When microwaves with a power of about 500 to 1000 W are used, the heat treatment with microwaves is preferably performed once or more for about 10 seconds to 2 minutes at a time. Further, the heat treatment with high-temperature and high-velocity air stream is preferably performed by blowing, onto the potato slices, air stream at a temperature of about 150°C or higher and an air velocity of about 40 m/s or higher for about 60 seconds to 5 minutes without burning the potato slices. It is to be noted that when a reduction in the amount of production of acrylamide is desired, the temperature of the air stream blown onto the potato slices is preferably about 250°C or less.

The present invention is directed also to potato chips produced by the above production method. The potato chips can have an oil content of 15 wt% or less, and are therefore healthy potato chips having a crispy texture and a low calorie content.

### Advantageous Effects of Invention

According to the method for producing potato chips of the present invention, it is possible to obtain potato chips that are produced without frying in oil and therefore have a significantly reduced oil content even when oil is applied to potato slices in the course of production, but have a crispy texture comparable to that of fried potato chips. Here, the crispy texture refers to a texture such that food is readily broken into pieces when taken into the mouth and the pieces do not remain in the mouth.

### Description of Embodiments

The present invention will be described in detail with reference to a production process. In the present invention, thin slices of raw potatoes are used as a raw material. Raw potatoes are washed, peeled if necessary, trimmed, and cut into thin slices with a slicer or the like. The thickness of the slices is preferably about 0.8 mm to 3.0 mm, particularly preferably about 1.0 mm to 1.4 mm in terms of the texture or the like of a product. It is to be noted that raw potatoes may be cut into slices having smooth surfaces, but may also be cut into slices having a W-shaped cross section.

These potato slices may be used directly. Alternatively, these potato slices may be previously immersed in cold or hot water and then dewatered to wash away starch from the surface of the potato slices and prevent discoloration caused by long-time exposure to air.

Oil is preferably applied to the potato slices. Oil has a higher boiling point than water. Therefore, the potato slices can be efficiently heated to a temperature exceeding 100°C in a heating step, to be described later, by adhering oil to the potato slices so that the product can have a texture close to that of fried potato chips. The application of oil is preferably performed before heat treatment involving blowing high-temperature and high-velocity air stream to be described later. That is, the application of oil may be performed before or after heating with superheated steam to be described later or before or after heating with microwaves that is performed if necessary, or may be performed at two or more time points of them.

The oil to be applied is not particularly limited, and examples thereof include rice refined oil and palm olein oil. The amount of the oil to be applied may be as small as about 1% of the weight of the potato slices. In order to obtain potato chips having a low oil content and a good texture as a product, the oil is particularly preferably applied in an amount of about 1.5 to 5 wt%. A method for adhering the oil may be appropriately selected from, for example, spraying, coating, and immersion.

In the present invention, the thus prepared potato slices or potato slices with oil are heated with superheated steam. The superheated steam can be used at 100°C or more. However, the heating with superheated steam is preferably performed at about 120 to 300°C, particularly preferably about 180 to 210°C for about 20 seconds to 1 minute. By heating the potato slices with high-temperature superheated steam in this way, the potato slices can be gelatinized and quickly heated.

However, when continuously heated with high-temperature superheated steam, the potato slices are quickly dried due to a large amount of heat of the superheated steam, and therefore a crispy texture cannot be achieved. Therefore, in order to prevent the potato slices from being excessively dried, the potato slices may be repeatedly taken in and out of a steam chamber, or moisture may be supplied more than once by, for example, showering water during the heating with superheated steam.

Further, heating with microwaves may also be performed before or after the heating with superheated steam. A means for heating with microwaves is not particularly limited, and an example thereof includes a microwave oven. In the case of 500 W (10 to 20 g of the potato slices), the heating with microwaves is preferably performed for about 10 to 30 seconds, particularly preferably about 20 seconds. By heating the potato slices with microwaves in this way, the potato slices are uniformly gelatinized and quickly heated. It is to be noted that when the potato slices are subjected to the heat treatment with microwaves, the heat treatment with microwaves is preferably performed before the heat treatment with superheated steam from the viewpoint of achieving a crispy texture.

After the heating step and the application of oil, the potato slices are then heated and puffed by blowing high-temperature and high-velocity air stream thereonto. The potato slices are estimated to be puffed to some extent also during the heating with microwaves or superheated steam, but are most puffed during the heating with high-temperature and high-velocity air stream. However, in the case of the present invention, the potato slices are not sufficiently puffed or are non-uniformly puffed unless the heat treatment involving blowing high-temperature and high-velocity air stream is performed in combination with the heating with superheated steam, and as a result the product cannot have a crispy texture. Further, when oil is applied to the potato slices, the potato slices are heated to a temperature exceeding 100°C during the heat treatment with high-temperature and high-velocity air stream, which is considered as a factor for further giving the product texture and flavor like a fried product.

The heat treatment involving blowing high-temperature and high-velocity air stream may be performed at at least 100°C so that the potato slices are puffed. However, in order to achieve a more preferred texture, the heat treatment involving blowing high-temperature and high-velocity air stream is preferably performed at a temperature of about 180°C or higher and an air velocity of about 50 m/s or higher, particularly preferably at a temperature of about 200°C or higher for, for example, about 1 minute and 30 seconds to 5 minutes to the extent that potato chips do not burn. More specifically, when the temperature and air velocity of the air stream are about 200°C and about 60 m/s, respectively, the heat treatment may be performed for, for example, about 3 minutes. When the temperature of the air stream is less than about 150°C, the product is likely to have a bad texture. Further, when the air velocity of the air stream is about 40 m/s or less, the potato slices are less likely to puff so that the final product has a hard texture. Further, when a reduction in the production of acrylamide is desired, the potato slices are preferably puffed and dried at about 250°C or less to the extent that potato chips do not burn.

A device for generating such high-temperature and high-velocity air stream as described above is not particularly limited as long as the potato slices can be puffed and dried. However, a device is preferred in which air stream supplied from a fan is jetted through a number of slit- or tube-shaped jet nozzles provided above a conveyor that runs through a drier to blow high-velocity hot air onto an object on the conveyor. More specifically, a device disclosed in JP-A-9-210554 or JP-A-2003-90681 or a vertical air impingement-type device (e.g., THERMOZONE (registered trademark) manufactured by ARAKAWA CO., LTD.) is used.

In this way, the potato slices may be puffed and dried by the heat treatment with high-temperature and high-velocity air stream to produce potato chips. However, the potato chips are likely to burn when such high-temperature air stream is continuously blown thereonto. For this reason, after subjected to the heat treatment with high-temperature and high-velocity air stream, the potato slices are preferably further subjected to final drying by reducing the temperature of the air stream or by a conventional hot-air drying method performed at about 80 to 120°C, preferably 100°C or less. If necessary, the final drying may be performed in combination with another drying method. The potato slices are preferably dried until their final moisture content is reduced to about 3% or less.

After the drying, the potato chips may be seasoned by spraying a small amount of seasoning oil and sprinkling salt, spices, or the like. The thus obtained seasoned or non-seasoned potato chips are provided as a final product preferably hermetically sealed in a bag or a package of an aluminum-evaporated film or the like, impervious to oxygen and moisture.

The thus produced potato chips according to the present invention are non-fried potato chips, and therefore can have a lower oil content of about 25% or less as compared to fried potato chips while having flavor and texture comparable to those of the fried potato chips. Further, although the texture is different from that of fried potato chips, the potato chips according to the present invention can have an oil content as low as about 1% while having a flavor that is not significantly different from that of the fried potato chips. Further, the potato chips according to the present invention can have an oil content as low as about 2% while having a preferred texture. That is, the oil content of the product can be reduced to 1/2 or less to 1/20 of that of fried potato chips, which makes it possible to significantly reduce the calorie of the product. Further, the amount of production of acrylamide, which is a problem for fried potato chips, is very small.

### <Example 1>

Potatoes (breed: TOYOSHIRO) suitable for potato chips were washed, peeled with a peeler, and cut into slices having a thickness of 1.0 mm to 1.1 mm with a slicer. The potato slices were spread, and palm olein oil was sprayed onto the potato slices in an amount of 2 wt% of the weight of the potato slices. Twenty grams of the potato slices were placed in a microwave oven with an output power of 500 W without overlapping more than the 2 potato slices and heated with microwaves for 20 seconds.

After the heating with microwaves, the potato slices were heated for 30 seconds with superheated steam in a steam chamber to which the superheated steam was supplied at a steam flow rate of 180 kg/h so that the temperature of the superheated steam impinging on the surface of the potato slices was 190°C. Then, the potato slices were heat-treated by blowing high-temperature and high-velocity air stream with a maximum air velocity of 60 m/s and a temperature of 200°C onto them for 3 minutes using a high-temperature and high-velocity air stream heat treatment device (THERMOZONE (registered trademark) manufactured by ARAKAWA CO., LTD., fluidized bed (air bed)-type heat treatment device) equipped with a number of thin tube-shaped jet nozzles located above a conveyor. Finally, the potato slices were subjected to final drying for 60 minutes in a hot-air drier at a temperature of 85°C and an air velocity of 4 m/s until their moisture content was reduced to 2% to produce non-fried potato chips.

The oil content of the non-fried potato chips of Example 1 was measured and found to be 8%. The non-fried potato chips of Example 1 had a calorie content of 414 kcal/100 g. That is, the oil and calorie contents of the non-fried potato chips of Example 1 were significantly reduced as compared to a commercially-available common fried product (oil content: about 40%, calorie content: 570 kcal/100 g).

### <Example 2>

Non-fried potato chips were produced in the same manner as in Example 1 except that, in the production method employed in Example 1, the step of spraying palm olein oil in an amount of 2 wt% of the weight of potato slices was performed after heating with microwaves but before heating with superheated steam.

### <Example 3>

Non-fried potato chips were produced in the same manner as in Example 1 except that, in the production method employed in Example 1, the step of spraying palm olein oil in an amount of 2 wt% of the weight of potato slices was performed after heating with superheated steam but before heating with high-temperature and high-velocity air stream.

### <Example 4>

Non-fried potato chips were produced by performing heating with superheated steam instead of heating with microwaves in a microwave oven with an output power of 500 W performed in the production method employed in Example 1 and then by performing heating with superheated steam and heating with high-temperature and high-velocity air stream in the same manner as in Example 1. More specifically, oil was sprayed onto potato slices in the same manner as in Example 1, and then the potato slices were heated for 30 seconds with superheated steam in a steam chamber to which the superheated steam was supplied at a steam flow rate of 180 kg/h so that the temperature of the superheated steam impinging on the surface of the potato slices was 190°C. Then, the potato slices were once taken out of the chamber. After 10 seconds, the potato slices were again heated for 30 seconds with superheated steam in a steam chamber to which the superheated steam was supplied at a steam flow rate of 180 kg/h so that the temperature of the superheated steam impinging on the surface of the potato slices was 190°C. Then, the potato slices were heated by blowing high-temperature and high-velocity air stream thereonto and then subjected to final drying at 85°C in the same manner as in Example 1.

### <Comparative Example 1>

Commercially-available non-fried potato chips (manufactured by SAPPORO FINE FOODS CO., LTD. under the trade name of "Potekaru") were purchased and used as Comparative Example 1.

### <Comparative Example 2>

Based on JP-A-2005-245389 listed as Patent Literature 6 in the above citation list, non-fried potato chips of Comparative Example 2 were produced in the following manner: potato slices were heated with microwaves, then heated and puffed by blowing high-temperature and high-velocity air stream thereonto without using superheated steam, and then dried by conventional hot-air drying.

More specifically, potatoes (breed: TOYOSHIRO) suitable for potato chips were washed, peeled with a peeler, and cut into slices having a thickness of 1.0 mm to 1.1 mm with a slicer in the same manner as in Example 1. Twenty grams of the potato slices were heated with microwaves for 150 seconds in a microwave oven with an output power of 500 W to reduce their moisture content to 20%.

After the heating with microwaves, the potato slices were heat-treated to the extent that they did not burn by blowing high-temperature and high-velocity air stream with an air velocity of 60 m/s and a temperature of 200°C thereonto for 1 minute with the use of the same high-temperature and high-velocity air stream heat treatment device as used in Example 1. Then, palm olein oil was sprayed onto the potato slices so that the amount of the oil was 8% by weight. Finally, the potato slices were subjected to final drying in a hot-air drier at a temperature of 85°C and an air velocity of 4 m/s for 1 hour until their moisture content was reduced to about 2%. In this way, non-fried potato chips were produced.

### <Comparative Example 3>

Non-fried potato chips were produced simply by blowing high-temperature and high-velocity air stream onto potato slices for purpose of comparison. More specifically, palm olein oil was sprayed onto potato slices in an amount of 2 wt% of the weight of the potato slices. Then, high-temperature and high-velocity air stream was blown onto 100 g of the potato slices for 30 seconds using the same high-temperature and high-velocity air stream heat treatment device as used in Example 1, without blowing steam into a chamber of the device so that the temperature and air velocity of the air stream impinging on the surface of the potato slices were 150°C and 65 m/s, respectively. Then, the potato slices were taken out of the chamber, and were then again heated in the same manner.

After the heat treatment with high-temperature and high-velocity air stream was performed twice in such a manner as described above, the potato slices were again taken out of the chamber. After 20 seconds, the potato slices were again heat-treated to the extent that they did not burn by blowing high-temperature and high-velocity air stream with an air velocity of 60 m/s and a temperature of 200°C thereonto for 3 minutes with the use of the same high-temperature and high-velocity air stream heat treatment device as used in Example 1. Finally, the potato slices were subjected to final drying in a hot-air drier at a temperature of 85°C and an air velocity of 4 m/s for 1 hour until their moisture content was reduced to 2% or less. In this way, non-fried potato chips of Comparative Example 3 were produced.

Sensory evaluation was performed by 5 panelists on the non-fried potato chips produced in Examples 1 to 4 and Comparative Examples 2 and 3 and commercially-available non-fried potato chips of Comparative Example 1. The sensory evaluation was performed according to the following criteria. It is to be noted that all the panelists gave each sample the same rating.
The results are shown in Table 1.
A: The potato chips had a crispy texture comparable to that of fried potato chips.
B: The potato chips were slightly inferior in texture to fried potato chips but had a sufficient crispy texture so that the panelists did not notice that the potato chips were non-fried until it was pointed out to the panelists.
C: The potato chips had a crunchy texture different from the texture of fried potato chips.

The production method according to the present invention can produce non-fried potato chips having a texture rated as A or B according to the above criteria.

**[Table 1]**

| Process | | Sensory evaluation |
|---|---|---|
| Example 1 | Oil spraying → Microwaves → Superheated steam → High-temperature air stream → Hot air | A |
| Example 2 | Microwaves → Oil spraying → Superheated steam → High-temperature air stream → Hot air | A |
| Example 3 | Microwaves → Superheated steam → Oil spraying → High-temperature air stream → Hot air | A |
| Example 4 | Oil spraying → Superheated steam → Superheated steam → High-temperature air stream → Hot air | A |
| Comparative Example 1 | Commercially-available product | C |
| Comparative Example 2 | Microwaves → High-temperature air stream → Oil spraying → Hot air (see Patent Literature 6) | C |
| Comparative Example 3 | Oil spraying → High-temperature air stream (150°C)×2 → High-temperature air stream → Hot air | C |

### <Comparative Test 1> Study of heating methods 1

For purpose of comparison with the production method employed in Example 1, a production method of <Comparative Example 4> was employed in which heating with superheated steam (treatment with superheated steam at 190°C for 30 seconds) performed in Example 1 was omitted, a production method of <Comparative Example 5> was employed in which heat treatment with superheated steam (190°C) performed in Example 1 was extended to 5 minutes instead of performing treatment with high-temperature and high-velocity air stream, and then final drying with hot air at 85°C was performed in the same manner as in Example 1, and a production method of <Comparative Example 6> was employed in which heat treatment with superheated steam was performed in the same manner as in Example 1 except that the treatment time was extended to 20 minutes and the treatment temperature was reduced to 140°C, and then final drying was performed in the same manner as in Example 1.

Sensory evaluation was performed on non-fried potato chips produced by these different production methods. The results are shown in Table 2. It is to be noted that the sensory evaluation was made in the same manner as described above.

**[Table 2]**

| Process | | Sensory evaluation | Comment |
|---|---|---|---|
| Example 1 | | A | |
| Comparative Example 4 | Without superheated steam | C | Non-uniformly puffed, Crunchy |
| Comparative Example 5 | Without high-temperature air stream, Superheated steam 190°C | C | Not puffed at all, Plate-like shape, Burnt |
| Comparative Example 6 | Without high-temperature air stream, Superheated steam 140°C | C | Not puffed at all, Plate-like shape, Burnt |

### <Comparative Test 2> Study of conditions of superheated steam

Non-fried potato chips were produced in the same manner as in Example 1 except that the heating with superheated steam was performed at 215°C or 170°C for 30 seconds (Example 1: 190°C, 30 seconds). Sensory evaluation was performed on the non-fried potato chips produced under different temperature conditions. The results are shown in Table 3. It is to be noted that the sensory evaluation was performed in the same manner as described above.

**[Table 3]**

| Conditions of superheated steam | Sensory evaluation | Comment |
|---|---|---|
| 215°C, 30 seconds | B | Slightly crunchy |
| 190°C, 30 seconds | A | |
| 170°C, 30 seconds | B | Slightly crunchy |

### <Comparative Test Example 3> Study of conditions of high-temperature and high-velocity air stream

From the results of the Comparative Test 1, heat treatment with high-temperature and high-velocity air stream was considered to be necessary. Therefore, the temperature and time of the heat treatment were studied, and the acrylamide content of potato chips was measured. More specifically, the temperature and time of the heat treatment with high-temperature and high-velocity air stream performed in Example 1 were changed from 200°C and 3 minutes to 300°C and 1 minute and 30 seconds, 250°C and 2 minutes, and 180°C and 4 minutes and 30 seconds.

The acrylamide content was measured by GC/MS based on a method used in National Food Research Institute (Food Additives and Contaminants, 2003, 20, 215-220). It is to be noted that according to the homepage of the Ministry of Agriculture, Forestry, and Fisheries of Japan (Detailed information about acrylamide in foods), the acrylamide content of commercially-available fried potato chips is 117 ppb to 3770 ppb. The measurement results are shown in Table 4. It is to be noted that sensory evaluation was performed in the same manner as described above.

**[Table 4]**

| Conditions of high-temperature and high-velocity air stream | Sensory evaluation | Comment | Acrylamide content |
|---|---|---|---|
| 300°C/1.5 min | A | | 1120 ppb |
| 250°C/2 min | A | | 440 ppb |
| 200°C/3 min | A | | 27 ppb |
| 180°C/4.5 min | B | Slightly crunchy | 127 ppb |

### <Comparative Test Example 5> Study of amount of oil applied

Production methods were performed in the same manner as in Example 1 except that the amount of oil sprayed onto the surface of potato slices before heating with microwaves was changed to 12%, 6%, 3.5%, 2%, and 1% of the weight of the potato slices. The oil contents of the thus produced potato chips after drying (after hot-air drying at 85°C for 30 minutes) are shown in Table 5.

**[Table 5]**

| Amount of sprayed oil | Sensory evaluation | Comment | Oil content after drying |
|---|---|---|---|
| 12% | A | | 20% |
| 6% | A | | 15% |
| 3.5% | A | | 12.5% |
| 2% | A | | 8% |
| 1% | B | Slightly crunchy | 6% |

### Industrial Applicability

The present invention is useful for producing healthy potato chips having a low calorie content and a low acrylamide content.

## Claims

1. A method for producing potato chips, comprising a step of subjecting potato slices to heat treatment with superheated steam and then subjecting the potato slices to heat treatment with high-temperature and high-velocity air stream at 100°C or higher.

2. The method for producing potato chips according to claim 1, comprising a step of adhering oil to the potato slices before the heat treatment with high-temperature and high-velocity air stream at 100°C or higher.

3. The method for producing potato chips according to claim 1 or 2, further comprising a step of subjecting the potato slices to final drying by a hot-air drying method after the heat treatment with high-temperature and high-velocity air stream at 100°C or higher.

4. The method for producing potato chips according to any one of claims 1 to 3, further comprising heat treatment with microwaves before or after the heat treatment with superheated steam but before the heat treatment with high-temperature and high-velocity air stream at 100°C or higher.

5. The method for producing potato chips according to any one of claims 1 to 4, wherein the heat treatment with high-temperature and high-velocity air stream is treatment performed by blowing air stream having a temperature of 150°C or higher and an air velocity of 40 m/s or higher onto the potato slices.

6. The method for producing potato chips according to any one of claims 1 to 5, wherein the heat treatment with superheated steam is heat treatment performed in a chamber at a temperature of 120°C to 300°C.

7. Non-fried potato chips produced by the production method according to any one of claims 1 to 6, which have an oil content of 15 wt% or less.
